# EUROPEAN PATENT APPLICATION

(11) **EP 4 582 214 A1**
(43) Date of publication of application: **09.07.2025**
(21) Application number: 23859883.3
(22) Date of filing: 20.07.2023
(51) Int. Cl.: B23K 37/02, B23K 9/12, B23K 31/00

(54) **TRUCK FOR WELDING WORK, WELDING WORK SYSTEM, AND WELDING WORK METHOD**

(30) Priority: 31.08.2022 JP 2022138028
(71) Applicant: KAWASAKI JUKOGYO KABUSHIKI KAISHA, Kobe-shi, Hyogo 650-8670 (JP)
(72) Inventor: KOZUKI, Takanori, Kobe-shi, Hyogo 650-8670 (JP); IKEZAWA, Yukio, Kobe-shi, Hyogo 650-8670 (JP); MAEGAWA, Michitaka, Kobe-shi, Hyogo 650-8670 (JP); MIKI, Natsuhiko, Kobe-shi, Hyogo 650-8670 (JP); OKAMOTO, Keiichi, Kobe-shi, Hyogo 650-8670 (JP); KONISHI, Hiroyuki, Kobe-shi, Hyogo 650-8670 (JP)
(74) Representative: Arnold & Siedsma
(86) International application number: PCT/JP2023/026641
(87) International publication number: WO 2024/048114

(57) **Abstract**

A welding carriage includes: a carriage main body including a securing surface to which one operation machine is secured, the one operation machine being selected from different types of operation machines that perform different welding operations; a wheel that is supported by the carriage main body and brought into contact with a surface of a workpiece that is a welding target; a motor that operates to move the carriage main body on the surface of the workpiece; and carriage control circuitry that controls the motor. The carriage main body removably receives the operation machine that is secured to the securing surface.

## Description

### Technical Field

The present disclosure relates to a welding carriage, a welding system, and a welding method.

### Background Art

In the welding work, not only a welding machine which actually performs welding, but also various processing machines which shape the weld bead formed on the workpiece by the welding machine and gauge the back side of the groove, and inspection machines for performing inspections before and after welding, are used.

For example, in order to automate various welding operations performed in production of a large-sized structure, the welding machine, the processing machines, the inspection machines etc. need to be configured as self-propelled automatic machines, and each of the machines such as the welding machine needs to be automatically moved along the welding line of the groove of the workpiece while performing a corresponding one of the operations.

For example, Patent Literature 1 discloses a welding machine having a welding torch mounted to a self-propelled carriage. Patent Literature 2 discloses a processing machine having a machining cutter attached to a self-propelled carriage to grind a weld bead.

### Citation List

### Patent Literature

PTL 1: Japanese Laid-Open Patent Application Publication No. 2008-302386
PTL 2: Japanese Utility Model Registration No. 3192280

### Summary of Invention

### Technical Problem

However, such a conventional configuration as mentioned above requires changing the machine to be automatically moved depending on the contents of the intended one of welding operations even when all of the welding operations are performed along a single welding line. This machine replacement process is cumbersome.

It is therefore an object of the present disclosure to provide a welding carriage, a welding system, and a welding method that allow for simple implementation of different types of welding operations.

### Solution to Problem

A welding carriage according to one aspect of the present disclosure includes: a carriage main body including a securing surface to which one operation machine is secured, the one operation machine being selected from different types of operation machines that perform different welding operations; a wheel that is supported by the carriage main body and brought into contact with a surface of a workpiece that is a welding target; a motor that operates to move the carriage main body on the surface of the workpiece; and carriage control circuitry that controls the motor, wherein the carriage main body removably receives the operation machine that is secured to the securing surface.

A welding system according to another aspect of the present disclosure includes: the above welding carriage; and the different types of operation machines securable to the securing surface, wherein the different types of operation machines include: a welding machine that includes a welding torch and performs welding while moving the welding torch; a processing machine that performs a process related to welding; or an inspection machine that performs an inspection before or after welding.

A welding method according to another aspect of the present disclosure includes: preparing a welding carriage, the welding carriage including a carriage main body including a securing surface to which one operation machine is secured, the one operation machine being selected from different types of operation machines that perform different welding operations, and a wheel that is supported by the carriage main body and brought into contact with a surface of a workpiece that is a welding target; securing to the securing surface a first operation machine for a first operation to be performed; performing the first operation by the first operation machine while moving the welding carriage; after completion of the first operation, changing the operation machine secured to the securing surface from the first operation machine to a second operation machine for a second operation to be subsequently performed; and performing the second operation by the second operation machine while moving the welding carriage.

### Advantageous Effects of Invention

The present disclosure allows for simple implementation of different types of welding operations.

### Brief Description of Drawings

FIG. 1 is a front view showing a schematic configuration of a welding system according to one embodiment of the present disclosure.
FIG. 2 is a bottom view of the carriage main body shown in FIG. 1.
FIG. 3 is a block diagram showing a schematic configuration of a control system of the welding system shown in FIG. 1.
FIG. 4 is an image diagram showing different types of operation machines that can be secured to the welding carriage according to the present embodiment.

### Description of Embodiments

The following will describe a welding system including a welding carriage according to one embodiment of the present disclosure.

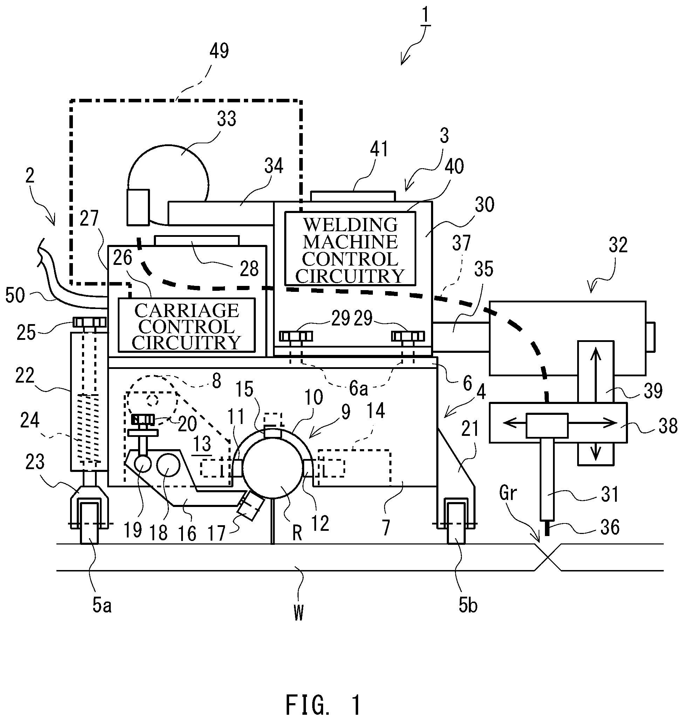

FIG. 1 is a front view showing a schematic configuration of the welding system according to one embodiment of the present disclosure. In FIG. 1, a workpiece W that is a welding target is positioned horizontally, and the welding system 1 is located on a surface of the workpiece W. Thus, in the following description, a portion of the welding system 1 that is relatively far from the surface of the workpiece W is an upper portion, while a portion of the welding system 1 that is relatively close to the surface of the workpiece W is a lower portion.

In the present embodiment, the welding system 1 includes a welding carriage 2 and an operation machine 3 mounted on the welding carriage 2. Hereinafter, the welding carriage 2 is also simply referred to as the carriage 2. The carriage 2 includes a carriage main body 4 and wheels 5a and 5b supported by the carriage main body 4. The carriage main body 4 includes a securing surface 6 to which the operation machine 3 is secured. The carriage main body 4 includes an enclosure 7 in the shape of a rectangular parallelepiped. The upper surface of the enclosure 7 serves as the securing surface 6. The wheels 5a and 5b are brought into contact with the surface of the workpiece W.

The carriage 2 includes a motor 8 that operates to move the carriage main body 4 on the surface of the workpiece W. The motor 8 is located in the enclosure 7. The motor 8 is supplied with electric power delivered from an external source through a power cable 50. Alternatively, the carriage 2 may be equipped with a battery.

In the present embodiment, a rail R is secured to the surface of the workpiece W along a welding line. The securing of the rail R is not limited to using particular means. For example, the rail R may be secured to the workpiece W by welding, by a magnet, or by a vacuum pad. The rail R is circular in cross-section. For example, the rail R is a pipe rail. The carriage main body 4 includes a rail holder 9 that holds the rail R. The enclosure 7 includes a recess 10 in its lower surface which is opposite to the securing surface 6, and the rail R is inserted in the recess 10. The recess 10 is arc-shaped in cross-section. The rail holder 9 is located around the recess 10.

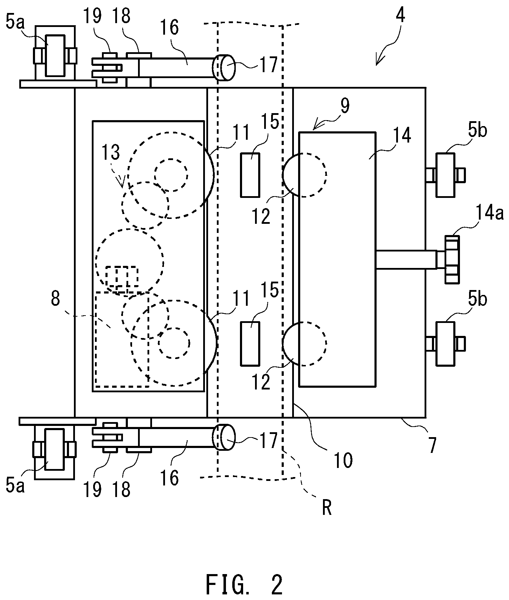

FIG. 2 is a bottom view of the carriage main body shown in FIG. 1. The rail holder 9 includes a pair of rollers between which the rail R is held. The pair of rollers includes a drive roller 11 actuated by the motor 8 and a driven roller 12 opposed to the drive roller 11. The carriage main body 4 includes a link 13 that transmits drive power of the motor 8 to the drive roller 11 to rotate the drive roller 11. The link 13 includes, for example, a gear box.

There are two drive rollers 11 arranged in the direction in which the rail R extends, and there are two driven rollers 12 arranged in the direction in which the rail R extends. That is, the rail holder 9 includes two roller pairs. The rotational axes of the drive and driven rollers 11 and 12 are perpendicular to the securing surface 6. The paired rollers are located on the opposite sides of the recess 10. That is, the paired rollers hold the rail R therebetween in the left-right direction.

The rail holder 9 includes a presser 14 that presses the driven rollers 12 toward the drive rollers 11. In the present embodiment, the presser 14 includes a pressing adjuster 14a, and the pressing adjuster 14a is operated to change the distance from the driven rollers 12 to the drive rollers 11. Bringing the driven rollers 12 closer to the drive rollers 11 with the rail R held between the drive and driven rollers 11 and 12 increases the pressure with which the rail R is held between the drive and driven rollers 11 and 12.

The driven rollers 12 are made of a resin less elastic than the material of the drive rollers 11. For example, the drive rollers 11 used may be rollers each of which includes an elastomer layer serving as a contact surface that contacts the rail R. The driven rollers 12 used may be resin rollers each of which includes no elastomer layer serving as a contact surface that contacts the rail R. Alternatively, rollers made of a material that is not less elastic than the material of the drive rollers 11 may be used as the driven rollers 12. The materials of the drive and driven rollers 11 and 12 are not limited to those mentioned as examples, and various kinds of materials can be used.

In the present embodiment, the rail holder 9 includes a first auxiliary roller 15 located at the bottom surface of the recess 10, namely, above the lower surface of the enclosure 7. The first auxiliary roller 15 has a rotational axis parallel to the securing surface 6 and orthogonal to the longitudinal direction of the recess 10, i.e., the direction in which the rail R extends. The first auxiliary roller 15 is located in correspondence with the pair of rollers 11 and 12 in the longitudinal direction of the recess 10.

The rail holder 9 further includes a second auxiliary roller 17 attached to an arm 16 extending from the enclosure 7, the second auxiliary roller 17 being located across the rail R from the first auxiliary roller 15 in the direction perpendicular to the securing surface 6. The arm 16 is located outside a side surface of the enclosure 7. The second auxiliary roller 17 is tilted relative to the direction perpendicular to the securing surface 6. The rail holder 9 includes two first auxiliary rollers 15 and two second auxiliary rollers 17. The first auxiliary rollers 15 are located above the rail R. The second auxiliary rollers 17 are located obliquely below the rail R.

The arm 16 biases the second auxiliary roller 17 toward the first auxiliary roller 15. The arm 16 is attached to a shaft 18 secured to the enclosure 7 and pivotable about the shaft 18. The second auxiliary roller 17 is attached to the distal end of the arm 16. A biasing force-adjusting pin 19 is secured to the arm 16. A biasing force-adjusting screw 20 in contact with the biasing force-adjusting pin 19 is supported by the enclosure 7. Fastening the biasing force-adjusting screw 20 causes the arm 16 to pivot about the shaft 18, thus increasing the force with which the second auxiliary roller 17 presses the rail R.

In the present embodiment, as described above, the drive rollers 11 are rotated by drive power of the motor 8, with the rail R held between the paired rollers 11 and 12, and this rotation causes the welding carriage 2 to move along the rail R. During this movement, the wheels 5a and 5b rotate in contact with the workpiece W. By virtue of being held on the rail R with the aid of the rail holder 9, the welding carriage 2 can be moved along the rail R to perform a given welding operation on the workpiece W by the operation machine 3 mounted on the welding carriage 2, not only in case that the surface of the workpiece W faces upward but also in case that the surface of the workpiece W faces laterally or downward.

The wheels 5a and 5b include a first wheel 5a located in a first direction orthogonal to the rail R with respect to the carriage main body 4 and a second wheel 5b located in a second direction opposite to the first direction with respect to the carriage main body 4. In the present embodiment, the first direction is a direction in which the drive rollers 11 of the paired rollers are located with respect to the rail R, while the second direction is a direction in which the driven rollers 12 of the paired rollers are located with respect to the rail R.

The carriage main body 4 includes a first support 22 secured to the enclosure 7 and a second support 23 rotatably supporting the first wheel 5a. The second support 23 is connected to the first support 22 via an elastic element 24 and is extendable and retractable. The first wheel 5a is biased by the elastic force of the elastic element 24 in a direction from the carriage main body 4 toward the surface of the workpiece W. The biasing force acting on the first wheel 5a can be adjusted by a biasing force-adjusting screw 25. The second wheel 5b is rotatably supported by a support 21 secured to the enclosure 7.

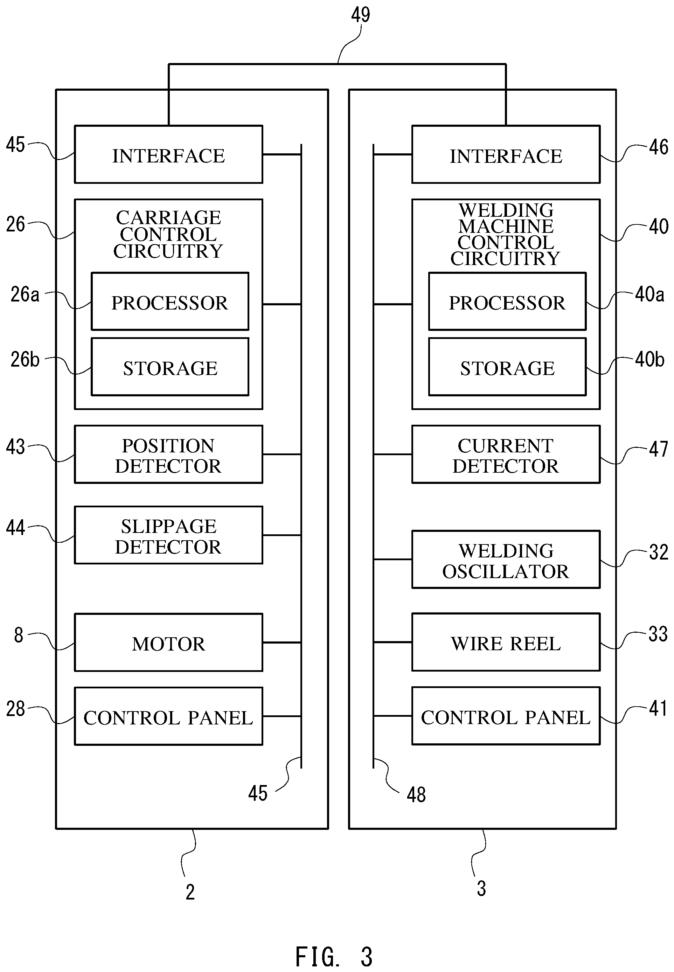

As shown in FIG. 3 described later, the carriage 2 includes a position detector 43 that detects the position of the carriage main body 4. For example, the position detector 43 detects the distance moved by the carriage 2 from a given reference position. The reference position can be set by a user and may be, for example, a predetermined operation starting position. For example, the position detector 43 includes a first encoder that detects the number of rotations made by the driven rollers 12 after the start of movement from the reference position. The distance moved by the carriage 2 can be determined from the diameter and the number of rotations of the driven rollers 12. Thus, the position of the carriage main body 4 can be identified.

Alternatively, the position detector 43 may include a timer that measures the time elapsing after the start of movement from the reference position. In case that the motor 8 is rotated at a constant speed and the amount of slippage described below is 0, the distance moved by the carriage 2 can be determined from the time for which the motor 8 runs after the start of movement from the reference position. Thus, the position of the carriage main body 4 can be identified. Alternatively, the position detector 43 may include a second encoder that detects the number of rotations made by the drive rollers 11 after the start of movement from the reference position.

As shown in FIG. 3 described later, the carriage 2 further includes a slippage detector 44 that detects the amount of deviation of the distance moved by the carriage main body 4 per unit rotation of the motor 8 from a reference value. For example, the slippage detector 44 includes a first encoder that detects the number of rotations made by the driven rollers 12 after the start of movement from the reference position and a second encoder that detects the number of rotations made by the drive rollers 11 after the start of movement from the reference position. The number of rotations made by the driven rollers 12 per unit time is determined from the value detected by the first encoder, and the number of rotations made by the drive rollers 11 per unit time is determined from the value detected by the second encoder. By finding the difference between the determined numbers of rotations per unit time, the amount of deviation of the distance moved by the carriage main body 4 per unit rotation of the motor 8 from the reference value, namely, the amount of slippage of the drive rollers 11 relative to the rail R, can be determined.

The slippage detector 44 may be devoid of the second encoder. In this case, the number of rotations made by the drive rollers 11 per unit time may be calculated from the rotational speed of the motor 8. The rotational speed of the motor 8 may be detected by an encoder that detects the rotational speed of the output shaft of the motor 8 or may be determined using a control command value given to the motor 8.

To a portion of the securing surface 6 of the carriage main body 4 is secured a case 27 on which carriage control circuitry 26 is mounted. The carriage 2 includes a control panel 28 located on the upper surface of the case 27 to manipulate the carriage 2 for welding operations. The carriage control circuitry 26 controls the motor 8. The carriage control circuitry 26 acquires data detected by the position detector 43 and the slippage detector 44. The carriage control circuitry 26 controls the motor 8 based on the detected position of the carriage main body 4. The carriage control circuitry 26 controls the motor 8 also based on the detected amount of deviation. For example, the carriage control circuitry 26 changes the rotational speed of the motor 8 according to the amount of deviation. The carriage control circuitry 26 may calculate the amount of deviation from the detection value obtained by the slippage detector 44. Alternatively, the slippage detector 44 may include a calculator that calculates the amount of deviation independently of the carriage control circuitry 26.

The operation machine 3 is removably secured to the securing surface 6. The securing surface 6 includes securing holes 6a. The operation machine 3 is secured to the securing surface 6 by securing screws 29 inserted in the securing holes 6a. The operation machine 3 can be removed from the securing surface 6 of the carriage main body 4 by loosening the securing screws 29.

In the example of FIG. 1, the operation machine 3 is a welding machine. The welding machine includes a welding machine main body 30 that is secured to the securing surface 6, a welding oscillator 32, and a wire reel 33 on which is wound a welding wire that is a wire-shaped filler metal. The wire reel 33 is secured to the welding machine main body 30 via a first arm 34 extending from the welding machine main body 30 in the first direction. The welding oscillator 32 is secured to the welding machine main body 30 via a second arm 35 extending from the welding machine main body 30 in the second direction opposite to the first direction. The first direction in which the first arm 34 extends is a direction that is orthogonal to the rail R and extends toward the first wheel 5a, with the welding machine main body 30 secured to the securing surface 6 of the carriage main body 4. The second direction in which the second arm 35 extends is a direction that is orthogonal to the rail R and extends toward the second wheel 5b, with the welding machine main body 30 secured to the securing surface 6 of the carriage main body 4.

The welding machine shown in the example of FIG. 1 is, for example, a consumable electrode-type welding machine such as a MIG welder, a MAG welder, or a FCAW welder. The welding oscillator 32 includes a welding torch 31 having an electrode 36 at its distal end. The electrode 36 of the welding torch 31 is directed toward the welding target. The electrode 36 is a welding wire 37 fed from the wire reel 33. The welding torch 31 includes a nozzle that delivers a shielding gas to the welding target. An electric wire extending from a power source is connected to the welding torch 31, to which electric power is delivered through the electric wire.

The workpiece W as the welding target includes two pieces to be welded together. The two pieces are placed end-to-end and there is a groove Gr in the region where a welding joint is to be formed. The groove Gr is such that with the two pieces placed end-to-end, their groove surfaces form a given groove angle. Considering that in some cases the region of contact between the two pieces may be curved, the term "groove angle" is intended to refer to the angle at which extensions of the groove surfaces intersect each other. The shape of the groove Gr is selected as appropriate from various shapes. The welding machine is placed in a position where the distal end of the electrode 36 of the welding torch 31 is directed toward the groove Gr of the workpiece W.

In the present embodiment, the welding machine includes a horizontal rail 38 extending in a direction horizontal to the workpiece W and a vertical rail 39 extending in a direction vertical to the workpiece W. The welding torch 31 is mounted to the horizontal rail 38 and slidable on the horizontal rail 38 in the horizontal direction. The horizontal rail 38 is mounted to the vertical rail 39 and slidable on the vertical rail 39 in the vertical direction. The welding machine includes an actuator that moves each of the welding torch 31 and the horizontal rail 38 individually. The moving structure for the welding torch 31 is not limited to this configuration. For example, the moving structure may be configured using an articulated robot that includes a distal part equipped with the welding torch 31.

The welding machine includes welding machine control circuitry 40 that controls the welding oscillator 32 and the wire reel 33. The welding machine control circuitry 40 is mounted within the welding machine main body 30. The welding machine includes a control panel 41 located on the upper surface of the welding machine main body 30 to manipulate the welding machine.

FIG. 3 is a block diagram showing a schematic configuration of a control system of the welding system shown in FIG. 1. In the carriage 2, as shown in FIG. 3, the carriage control circuitry 26, the control panel 28, the motor 8, an interface 42, the position detector 43, and the slippage detector 44 are connected to, and able to exchange signals with, one another via a bus 45. In the welding machine as the operation machine 3, the welding machine control circuitry 40, the control panel 41, the welding oscillator 32, the wire reel 33, an interface 46, and a current detector 47 are connected to, and able to exchange signals with, one another via a bus 48.

The interfaces 42 and 46 establish communication connections to external devices. In the present embodiment, the interfaces 42 and 46 are connected by a communication cable 49. Thus, the carriage control circuitry 26 is communicatively connected to the operation machine 3, and this enables data exchange etc. between the carriage control circuitry 26 and the welding machine control circuitry 40. Alternatively, the carriage control circuitry 26 and the welding machine control circuitry 40 may be configured to wirelessly communicate with each other.

The carriage control circuitry 26 includes a processor 26a and a storage 26b. The storage 26b stores data acquired from the detectors 43 and 44. The storage 26b further stores a control program for control of the motor 8 and therefore control of the movement of the carriage 2. Likewise, the welding machine control circuitry 40 includes a processor 40a and a storage 40b. The storage 40b stores data acquired from the current detector 47. The storage 40b further stores a control program for control of the welding oscillator 32 and the wire reel 33.

Each of the processors 26a and 40a includes, for example, a computer such as a microcontroller, a personal computer, or a PLC (Programmable Logic Controller). For example, each of the processors includes processing circuitry such as a CPU or MPU, a register, a RAM, and peripheral circuitry.

The functionality of the elements disclosed herein may be implemented using circuitry or processing circuitry which includes general purpose processors, special purpose processors, integrated circuits, ASICs (Application Specific Integrated Circuits), FPGAs (Field Programmable Gate Arrays), conventional circuitry or combinations thereof which are configured or programmed to perform the disclosed functionality. Processors are considered processing circuitry or circuitry as they include transistors and other circuitry therein. In the present disclosure, the circuitry, units, or means are hardware that carry out or are programmed to perform the recited functionality. The hardware may be any hardware disclosed herein or otherwise known hardware which is programmed or configured to carry out the recited functionality. When the hardware is a processor which may be considered a type of circuitry, the circuitry, means, or units are a combination of hardware and software, the software being used to configure the hardware or processor.

Since the carriage control circuitry 26 and the welding machine control circuitry 40 are communicatively connected as described above, the carriage control circuitry 26 can transmit the following data to the welding machine control circuitry 40: position data indicating the position of the carriage main body 4 detected by the position detector 43 mounted on the carriage 2; and control data such as the amount of deviation detected by the slippage detector 44 or the current speed of the carriage 2.

The welding machine control circuitry 40 causes the welding machine to perform a basic action in which the welding torch 31 is periodically moved over a given weaving width in the width direction of the groove Gr of the workpiece W and at the same time moved in the direction of the welding line of the workpiece W at a given torch height to track the welding line of the workpiece W. Thus, the welding machine control circuitry 40 can control the welding oscillator 32 and the wire reel 33 appropriately based on the state of the movement of the carriage 2 by acquiring data on the state of the movement of the carriage 2 in the direction of the welding line of the workpiece W from the carriage control circuitry 26.

For example, the welding machine control circuitry 40 may change the welding conditions in the welding machine based on the position of the carriage main body 4 detected by the position detector 43 or the amount of deviation detected by the slippage detector 44. For example, parameters defining the welding conditions may include the welding current, the weaving width, the weaving period, the end-point stop time, the middle-point stop time, the welding speed, and the feed speed of the welding wire 37. The welding current is an electric current supplied to the electrode 36 of the welding torch 31. In the case where the welding is pulse welding in which the voltage is increased and decreased at given time intervals, the peak current and the base current may be set as welding parameters related to the welding current.

The weaving width is the amount of movement of the welding torch 31 in the width direction of the groove Gr of the workpiece W. The weaving period is the period with which the welding torch 31 performs weaving motion in the width direction of the groove Gr. The end-point stop time is the time from when the welding torch 31 reaches one end point of the weaving motion in the groove width direction until the welding torch 31 begins to turn back toward the other end point of the weaving motion in the groove width direction. The middle-point stop time is the time for which the welding torch 31 remains stopped at the middle point of the weaving motion in the groove width direction. These stop times may be 0; that is, the welding torch 31 need not be stopped during the weaving motion. The welding speed is the speed at which the welding torch 31 moves in the direction of the welding line, namely, the speed of movement of the carriage 2. The feed speed of the welding wire 37 is the speed at which the welding wire 37 is fed from the wire reel 33 to the welding torch 31.

Furthermore, the welding machine control circuitry 40 can send the following data to the carriage control circuitry 26: data acquired by the current detector 47 mounted on the welding machine; and control data related to control of the welding machine. Thus, the carriage control circuitry 26 can control the movement of the carriage 2 based on the state of control of the welding machine.

The current detector 47 detects the welding current flowing through the electrode 36 of the welding torch 31. When the welding machine is of the consumable electrode type, the welding machine is controlled to bring the welding current to a suitable level. In this case, the controlled parameters include not only the weaving width, the torch height, and the wire feed speed which are controllable in the welding machine but also the speed of movement in the direction of the welding line. Thus, the carriage control circuitry 26 can control the movement of the carriage 2 based on data acquired by the current detector 47.

The welding machine control circuitry 40 may send a control command for the carriage 2 to the carriage control circuitry 26. The carriage control circuitry 26 may send a control command for the operation machine 3 to the welding machine control circuitry 40.

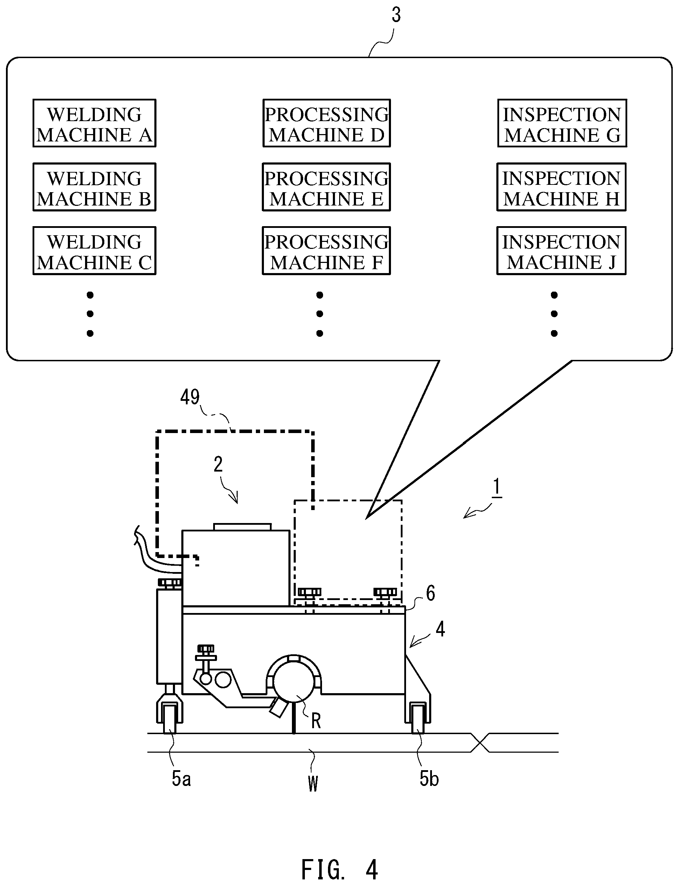

The carriage main body 4 removably receives the operation machine 3 that is secured to the securing surface 6. The operation machine 3 to be secured to the securing surface 6 of the carriage main body 4 is not limited to the welding machine illustrated in FIG. 1 but selected from different types of operation machines that perform different welding operations. FIG. 4 is an image diagram showing different types of operation machines that can be secured to the welding carriage according to the present embodiment.

The different types of operation machines 3 include: a welding machine as described above which includes the welding torch 31 and performs welding while moving the welding torch 31; a processing machine that performs a process related to welding; and an inspection machine that performs an inspection before or after welding. Furthermore, the different types of operation machines 3 include different types of welding machines that perform different types of welding. For example, the welding machine A is a MIG welder, the welding machine B is a FCAW welder, and the welding machine C is a TIG welder. The different types of welding machines may further include other welding machines such as a MAG welder and a plasma welder. For example, in the case where the operation machine 3 is a non-consumable electrode-type welding machine such as a TIG welder or a plasma welder, the operation machine 3 may include a voltage detector that detects an arc voltage.

The different types of operation machines 3 also include different types of processing machines that perform different types of processes. For example, the processing machine D is a grinder that grinds a weld bead, the processing machine E is a back chipping machine that cuts the back side of the groove Gr of the workpiece W by machining, and the processing machine F is a gouging machine that gouges the back side of the groove Gr of the workpiece W by means of a plasma. The different types of processing machines may further include other processing machines.

The different types of operation machines 3 also include different types of inspection machines that perform different types of inspections. For example, the inspection machine G is an RT inspection machine that performs a non-destructive inspection by means of radiation, and the inspection machine H is a UT inspection machine that performs a non-destructive inspection by means of ultrasound. The inspection machine J is an inspection machine that performs an inspection for the shape of the groove before welding. The different types of inspection machines may further include other inspection machines such as an MT inspection machine that performs a non-destructive inspection by means of magnetism and an inspection machine that performs an inspection for the visual shape of a weld bead.

The welding system 1 includes at least two operation machines as the different types of operation machines 3. The at least two operation machines may be at least two operation machines selected from the same category; for example, the at least two operation machines may include the welding machine A and the welding machine B. Alternatively, the at least two operation machines may be at least two operation machines selected from different categories; for example, the at least two operation machines may include the welding machine A and the processing machine D. In the case where three or more operation machines are prepared, two or more of the three or more operation machines may be selected from the same category and two or more of the three or more operation machines may be selected from different categories; for example, the three or more operation machines may include the welding machine A, the welding machine B, and the processing machine D.

The following will describe an example of welding operation procedures performed using the welding system 1 configured as described above. First, the rail R is secured along the direction in which the groove Gr of the workpiece W extends. The carriage 2 is caused to hold the rail R. After that, a first operation machine which is a welding machine is secured to the securing surface 6 of the carriage main body 4. The carriage 2 is moved, and along with the movement of the carriage 2 a welding operation is performed as a first operation by the first operation machine. After completion of the first operation, the first operation machine is removed from the carriage main body 4, and the operation machine secured to the securing surface 6 of the carriage main body 4 is changed to a second operation machine for a second operation to be subsequently performed. During replacement of the operation machine secured to the carriage main body 4, the carriage 2 may keep holding the rail R. For example, the second operation machine is a grinder that grinds a bead.

The carriage 2 with the grinder secured to the securing surface 6 is moved, and along with the movement of the carriage 2 a bead grinding operation is performed as the second operation by the second operation machine. After completion of the second operation, the second operation machine is removed from the carriage main body 4, and the operation machine secured to the securing surface 6 of the carriage main body 4 is changed to a third operation machine for a third operation to be subsequently performed. For example, the third operation machine is an inspection machine that performs a non-destructive inspection on the bead.

After completion of the welding on the front side of the groove Gr of the workpiece W, welding on the back side of the groove Gr is performed. In the case of welding on the back side of the groove Gr, the rail R is secured to the back side of the workpiece W along the direction in which the groove Gr extends. The carriage 2 is caused to hold the rail R. After that, a fourth operation machine is secured to the securing surface 6 of the carriage main body 4. For example, the fourth operation machine is a back chipping machine. The carriage 2 is moved, and along with the movement of the carriage 2 a back chipping operation is performed as a fourth operation by the fourth operation machine. After completion of the fourth operation, the fourth operation machine is removed from the carriage main body 4, and the operation machine secured to the securing surface 6 of the carriage main body 4 is changed to a fifth operation machine for an operation to be subsequently performed. For example, the fifth operation machine is a welding machine. In the fifth operation, as in the first operation, the carriage 2 is moved, and along with the movement of the carriage 2 a welding operation is performed on the back side of the workpiece W. After that, a machining process and a non-destructive inspection are performed in the same manner as on the front side.

In the present embodiment, as described above, an operation machine 3 selected from different types of operation machines is secured to one carriage 2, and the secured operation machine 3 is used to perform a welding operation. Thus, the same carriage 2 movable relative to the workpiece W can be used for different types of welding operations. This eliminates the need to prepare operation machines each of which is equipped with a dedicated moving structure when performing different types of welding operations, thus allowing for simple implementation of the different types of welding operations. In addition, since the same moving structure can be used in combination with different types of operation machines, the cost for manufacturing or maintenance of the different types of operation machines can be reduced.

Furthermore, the fact that the same moving structure can be used in combination with different types of operation machines allows the different types of operation machines to be used in a standardized way. This increases the ease of use for users, resulting in improved welding quality. Moreover, since the same moving structure can be used in combination with different types of operation machines, the burden involved in replacing the operation machine 3 for each welding operation can be reduced. This can lead to improved efficiency of the whole welding operations, reduced man-hours, and shortened lead time.

Since the carriage control circuitry 26 that controls the carriage 2 is communicatively connected to the operation machine 3 secured to the securing surface 6, detection data acquired from detectors such as the position detector 43 that detects the position of the carriage main body 4 or control data related to the control performed by the carriage control circuitry 26 on the carriage 2 can be used in the operation machine 3. For example, in the case where the operation machine 3 secured to the securing surface 6 is a welding machine, the welding machine can be controlled such that the welding machine starts to perform a welding operation at the same time as the carriage 2 starts to move and that the welding operation by the welding machine is ended at the same time as the carriage 2 comes to a stop after having moved a predetermine distance. Furthermore, the carriage control circuitry 26 can acquire detection data or control data related to the operation machine 3 and control the movement of the carriage 2 based on the acquired data. The welding operation can be efficiently accomplished by virtue of the fact that the communication connection between the carriage control circuitry 26 and the operation machine 3 enables the carriage 2 and the operation machine 3 to work in cooperation with each other as described above.

Furthermore, the storage 26b of the carriage control circuitry 26 can accumulate data acquired from different operation machines 3. The data accumulated from each of the operation machines 3 are stored in association with other data such as position data of the carriage 2. Thus, the accumulated data can easily be made mutually available to the different operation machines. For example, welding data in the welding machine A and non-destructive inspection data in the inspection machine G may be associated with each other; in this case, data on the welding conditions at the site of a weld defect can be collected. For example, inspection result data acquired by the inspection machine J that performs an instruction for the shape of the groove before welding may be referenced by the welding machine A. In this case, the welding machine A can change the welding conditions according to the shape of the groove. As described above, traceability can be established between different types of welding operations. This can eliminate or reduce the need for monitoring in the welding system 1.

Furthermore, in the present embodiment, the carriage 2 holds the rail R secured to the surface of the workpiece W and moves along the rail R. The rail R is positioned to extend in the direction of the welding line of the workpiece W; thus, appropriate tracking motion in the direction of the welding line of the groove Gr of the workpiece W can be achieved by moving the carriage 2 holding the rail R. In addition, since the rail R is held by the rail holder 9, the operation using the operation machine 3 can be effected irrespective of the direction in which the carriage 2 is oriented relative to a horizontal plane.

For example, it may be conceivable that the workpiece W has a curved portion and there is a variation in the angle of the surface of the workpiece W with respect to the ground. Even in this case, the presence of the rail holder 9 holding the rail R allows the operation machine 3 secured to the carriage 2 to continuously perform the welding operation over the entirety of the workpiece W.

Furthermore, in the present embodiment, the rail R is held between the pair of rollers 11 and 12, and one of the paired rollers, namely the driven roller 12, is pressed by the presser 14 toward the other drive roller 11. This makes it easier for the carriage 2 to move along the rail R while holding the rail R. In addiction, the drive roller 11 is actuated by the motor 8. The drive roller 11 actuated is pressed against the rail R by the pressing action of the presser 14; thus, the drive power of the drive roller 11 can be reliably transmitted to the rail R, and appropriate movement of the carriage 2 can be achieved irrespective of the orientation of the carriage 2.

In addition, the slippage detector 44 detects the amount of deviation of the distance moved by the carriage main body 4 per unit rotation of the motor 8 from a reference value. As stated above, the carriage 2 can assume various orientations; for this reason, the amount of slippage of the drive roller 11 relative to the rail R, and therefore the efficiency of transmission of drive power from the drive roller 11 actuated by the motor 8 to the rail R, can vary even when the drive power itself remains unchanged. The fact that the slippage detector 44 detects the degree of slippage as the amount of deviation of the distance moved by the carriage main body 4 from the reference value enables correction of the position to which the carriage 2 moves. Thus, the position of the carriage 2 that can assume various orientations can be precisely controlled.

In addition, the rail R is circular in cross-section, and this permits pivotal motion of the carriage 2 about the axis of the rail R. Furthermore, the first wheel 5a, which is one of the first and second wheels 5a and 5b in contact with the workpiece W and which is located in the first direction orthogonal to the rail R with respect to the carriage main body 4, is biased in a direction from the carriage main body 4 toward the surface of the workpiece W. This enables the carriage 2 to pivot in the circumferential direction of the rail R which is circular in cross-section. Thus, the carriage 2 can move along the rail R in conformity with the surface of the workpiece W. That is, the carriage main body 4 can be reliably kept in contact with the surface of the workpiece W irrespective of the orientation of the carriage 2. This makes it possible for the operation machine 3 mounted on the carriage 2 to properly perform the operation on the workpiece W.

### [Other Embodiments]

Although the foregoing has described an embodiment of the present invention, the present invention is not limited to the embodiment described above, and various modifications, changes, or alterations can be made without departing from the gist of the invention.

For example, the carriage 2 need not hold the rail R although the rail R is held by the carriage 2 in the above embodiment. For example, the carriage 2 may be configured as a self-propelled vehicle. In the case where the carriage 2 holds the rail R, the rail R is not limited to being circular in cross-section. Alternatively, for example, the carriage 2 may be supported on a pair of left and right rails like railway rails.

In the above embodiment, where the presser 14 generates a holding force with which the rail R is held by the pair of rollers 11 and 12, the holding force is manually adjusted by means of the pressing adjuster 14a. Alternatively, the holding force may be automatically adjusted, for example, by motor drive or by a pressure applied by a hydraulic cylinder.

In this case, the presser 14 may be configured to adjust the pressure for pressing the driven roller 12 toward the drive roller 11 based on a control command from the carriage control circuitry 26. Furthermore, the carriage control circuitry 26 may generate the control command for adjusting the pressure applied by the presser 14 according to the amount of deviation detected by the slippage detector 44. Controlling the presser 14 to reduce the amount of deviation can lead to a reduction in the speed change of the carriage 2 which occurs due to the motor 8 being controlled based on the amount of deviation.

In the above embodiment, the first wheel 5a of the wheels 5a and 5b is biased in a direction from the carriage main body 4 toward the surface of the workpiece W. Additionally or alternatively, the second wheel 5b may be biased in a direction from the carriage main body 4 toward the surface of the workpiece W.

Although in the above embodiment the carriage 2 includes the control panel 28 for the carriage 2 itself and the operation machine 3 includes the control panel 41 for the operation machine 3 itself, the present invention is not limited to this example. The carriage 2 or the operation machine 3 may include, for example, a common control panel for manipulating the carriage 2 and the operation machine 3. The carriage 2 or the operation machine 4 may include a remote manipulation terminal separate from the carriage main body 4 or the main body of the operation machine 4 and operable to remotely manipulate the carriage 2 or the operation machine 4. The remote manipulation terminal is connected to the carriage main body 4 or the main body of the operation machine 4 by wire or wirelessly. In the case of wireless connection, the remote manipulation terminal may be a communication terminal such as a smartphone which is capable of communication through a network such as the Internet.

Although in the above embodiment the carriage control circuitry 26 is communicatively connected to the operation machine 3 secured to the securing surface 6 of the carriage main body 4, the carriage control circuitry 26 and the operation machine 3 need not be communicatively connected to each other. In addition, the operation machine 3 secured to the securing surface 6 need not include any control circuitry. For example, the different operation machines may include a processing machine that starts to run upon receiving electric power. Such a processing machine may include a power on/off button independent of the carriage 2 and start to run once the on/off button is turned on. An operation machine having a communication function or a control function need not be communicatively connected to the carriage control circuitry 26.

### [Summary of the Present Disclosure]

### [Item 1]

A welding carriage according to one aspect of the present disclosure includes: a carriage main body including a securing surface to which one operation machine is secured, the one operation machine being selected from different types of operation machines that perform different welding operations; a wheel that is supported by the carriage main body and brought into contact with a surface of a workpiece that is a welding target; a motor that operates to move the carriage main body on the surface of the workpiece; and carriage control circuitry that controls the motor, wherein the carriage main body removably receives the operation machine that is secured to the securing surface.

In the above configuration, an operation machine selected from different types of operation machines is secured to one welding carriage, and the secured operation machine is used to perform a welding operation. Thus, the same welding carriage which is movable relative to the workpiece can be used for different types of welding operations. This eliminates the need to prepare operation machines each of which is equipped with a dedicated moving structure when performing different types of welding operations, thus allowing for simple implementation of the different types of welding operations. In addition, since the same moving structure can be used in combination with different types of operation machines, the cost for manufacturing or maintenance of the different types of operation machines can be reduced.

### [Item 2]

In the welding carriage according to item 1, the carriage main body may include a rail holder that holds a rail secured to the surface of the workpiece and extending in a direction of a welding line of the workpiece.

In the above configuration, the welding carriage holds the rail secured to the surface of the workpiece and moves along the rail. The rail is positioned to extend in the direction of the welding line of the workpiece; thus, appropriate tracking motion in the direction of the welding line of the groove of the workpiece can be achieved by moving the welding carriage which is holding the rail. In addition, since the rail is held by the rail holder, the operation using the operation machine can be effected irrespective of the direction in which the welding carriage is oriented relative to a horizontal plane.

### [Item 3]

In the welding carriage according to item 2, the rail holder may include a pair of rollers between which the rail is held, the pair of rollers may include a drive roller actuated by the motor and a driven roller, and the rail holder may include a presser that presses the driven roller toward the drive roller.

This configuration makes it easier for the welding carriage to move along the rail while holding the rail. In addiction, the drive roller is actuated by the motor. The drive roller actuated is pressed against the rail by the pressing action of the presser; thus, the drive power of the drive roller can be reliably transmitted to the rail, and appropriate movement of the welding carriage can be achieved irrespective of the orientation of the welding carriage.

### [Item 4]

In the welding carriage according to item 2 or 3, the wheel may be one of a plurality of wheels including a first wheel located in a first direction orthogonal to the rail with respect to the carriage main body and a second wheel located in a second direction opposite to the first direction with respect to the carriage main body, and the first wheel may be biased in a direction from the carriage main body toward the surface of the workpiece.

In this configuration, the carriage main body can be reliably kept in contact with the surface of the workpiece irrespective of the orientation of the welding carriage.

### [Item 5]

In the welding carriage according to any one of items 2 to 4, the rail may be circular in cross-section.

### [Item 6]

In the welding carriage according to any one of items 1 to 5, the carriage control circuitry may be communicatively connected to the operation machine.

In this configuration, detection data or control data related to the welding carriage can be used in the operation machine secured to the securing surface, while detection data or control data related to the secured operation machine can be used in the welding carriage. The welding operation can be efficiently accomplished by virtue of the fact that the communication connection between the carriage control circuitry and the operation machine enables the welding carriage and the operation machine to work in cooperation with each other.

### [Item 7]

In the welding carriage according to item 6, the carriage control circuitry may include a storage that stores data acquired from each of the different types of operation machines, the stored data being mutually available to the different types of operation machines.

### [Item 8]

The welding carriage according to any one of items 1 to 7 may further include a position detector that detects a position of the carriage main body, and the carriage control circuitry may control the motor based on the detected position of the carriage main body.

### [Item 9]

In the welding carriage according to item 8, the carriage control circuitry may be communicatively connected to the operation machine and transmit position data indicating the position of the carriage main body to the operation machine.

In this configuration, the operation machine can be controlled using the position data detected in the welding carriage.

### [Item 10]

The welding carriage according to any one of items 1 to 9 may further include a slippage detector that detects an amount of deviation of a distance moved by the carriage main body per unit rotation of the motor from a reference value.

The configuration in which the slippage detector detects the degree of slippage as the amount of deviation of the distance moved by the carriage main body from the reference value enables correction of the position to which the welding carriage moves. Thus, the position of the welding carriage that can assume various orientations can be precisely controlled.

### [Item 11]

In the welding carriage according to any one of items 1 to 10, the different types of operation machines may include: a welding machine that includes a welding torch and performs welding while moving the welding torch; a processing machine that performs a process related to welding; or an inspection machine that performs an inspection before or after welding.

### [Item 12]

A welding system according to another aspect of the present disclosure includes: the welding carriage according to any one of items 1 to 11; and the different types of operation machines securable to the securing surface, wherein the different types of operation machines include: a welding machine that includes a welding torch and performs welding while moving the welding torch; a processing machine that performs a process related to welding; or an inspection machine that performs an inspection before or after welding.

### [Item 13]

A welding method according to another aspect of the present disclosure includes: preparing a welding carriage, the welding carriage including a carriage main body including a securing surface to which one operation machine is secured, the one operation machine being selected from different types of operation machines that perform different welding operations, and a wheel that is supported by the carriage main body and brought into contact with a surface of a workpiece that is a welding target; securing to the securing surface a first operation machine for a first operation to be performed; performing the first operation by the first operation machine while moving the welding carriage; after completion of the first operation, changing the operation machine secured to the securing surface from the first operation machine to a second operation machine for a second operation to be subsequently performed; and performing the second operation by the second operation machine while moving the welding carriage.

### Reference Signs List

- 1: welding system
- 2: welding carriage
- 3: operation machine
- 4: carriage main body
- 6: securing surface
- 5a: first wheel
- 5b: second wheel
- 8: motor
- 9: rail holder
- 11: drive roller
- 12: driven roller
- 14: presser
- 26: carriage control circuitry
- 43: position detector
- 44: slippage detector
- R: rail
- W: workpiece

## Claims

1. A welding carriage, comprising:
a carriage main body including a securing surface to which one operation machine is secured, the one operation machine being selected from different types of operation machines that perform different welding operations;
a wheel that is supported by the carriage main body and brought into contact with a surface of a workpiece that is a welding target;
a motor that operates to move the carriage main body on the surface of the workpiece; and
carriage control circuitry that controls the motor, wherein
the carriage main body removably receives the operation machine that is secured to the securing surface.

2. The welding carriage according to claim 1, wherein
the carriage main body includes a rail holder that holds a rail secured to the surface of the workpiece and extending in a direction of a welding line of the workpiece.

3. The welding carriage according to claim 2, wherein
the rail holder includes a pair of rollers between which the rail is held,
the pair of rollers includes a drive roller actuated by the motor and a driven roller, and
the rail holder includes a presser that presses the driven roller toward the drive roller.

4. The welding carriage according to claim 2, wherein
the wheel is one of a plurality of wheels including a first wheel located in a first direction orthogonal to the rail with respect to the carriage main body and a second wheel located in a second direction opposite to the first direction with respect to the carriage main body, and
the first wheel is biased in a direction from the carriage main body toward the surface of the workpiece.

5. The welding carriage according to claim 2, wherein
the rail is circular in cross-section.

6. The welding carriage according to any one of claims 1 to 5, wherein
the carriage control circuitry is communicatively connected to the operation machine.

7. The welding carriage according to claim 6, wherein
the carriage control circuitry includes a storage that stores data acquired from each of the different types of operation machines, the stored data being mutually available to the different types of operation machines.

8. The welding carriage according to any one of claims 1 to 5, further comprising a position detector that detects a position of the carriage main body, wherein
the carriage control circuitry controls the motor based on the detected position of the carriage main body.

9. The welding carriage according to claim 8, wherein
the carriage control circuitry is communicatively connected to the operation machine, and
the carriage control circuitry transmits position data indicating the position of the carriage main body to the operation machine.

10. The welding carriage according to any one of claims 1 to 5, further comprising a slippage detector that detects an amount of deviation of a distance moved by the carriage main body per unit rotation of the motor from a reference value.

11. The welding carriage according to any one of claims 1 to 5, wherein
the different types of operation machines include: a welding machine that includes a welding torch and performs welding while moving the welding torch; a processing machine that performs a process related to welding; or an inspection machine that performs an inspection before or after welding.

12. A welding system comprising:
the welding carriage according to any one of claims 1 to 5; and
the different types of operation machines securable to the securing surface, wherein
the different types of operation machines include: a welding machine that includes a welding torch and performs welding while moving the welding torch; a processing machine that performs a process related to welding; or an inspection machine that performs an inspection before or after welding.

13. A welding method comprising:
preparing a welding carriage, the welding carriage including
a carriage main body including a securing surface to which one operation machine is secured, the one operation machine being selected from different types of operation machines that perform different welding operations, and
a wheel that is supported by the carriage main body and brought into contact with a surface of a workpiece that is a welding target;
securing to the securing surface a first operation machine for a first operation to be performed;
performing the first operation by the first operation machine while moving the welding carriage;
after completion of the first operation, changing the operation machine secured to the securing surface from the first operation machine to a second operation machine for a second operation to be subsequently performed; and
performing the second operation by the second operation machine while moving the welding carriage.
